(19) Europäisches Patentamt
European Patent Office
Office européen des brevets

(11) **EP 2 764 740 B1**

(12) **EUROPEAN PATENT SPECIFICATION**

(45) Date of publication and mention
of the grant of the patent:
**06.12.2017 Bulletin 2017/49**

(51) Int Cl.:
**H04W 64/00** *(2009.01)* **H04W 36/00** *(2009.01)*
**H04W 48/00** *(2009.01)*

(21) Application number: **12770380.9**

(22) Date of filing: **21.09.2012**

(86) International application number:
**PCT/US2012/056460**

(87) International publication number:
**WO 2013/052286 (11.04.2013 Gazette 2013/15)**

(54) **METHOD OF ESTIMATING MOBILITY OF USER EQUIPMENT AND A WIRELESS DEVICE**

VERFAHREN ZUR SCHÄTZUNG DER MOBILITÄT EINER BENUTZERVORRICHTUNG UND DRAHTLOSE VORRICHTUNG

PROCÉDÉ D'ESTIMATION DE MOBILITÉ D'ÉQUIPEMENT UTILISATEUR ET DISPOSITIF SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.10.2011 US 201113251430**

(43) Date of publication of application:
**13.08.2014 Bulletin 2014/33**

(73) Proprietor: **ALCATEL LUCENT**
**92100 Boulogne-Billancourt (FR)**

(72) Inventors:
- **ZOU, Jialin**
**Randolph, NJ 07869 (US)**
- **SIVANESAN, Kathiravetpillai**
**Richardson, TX 75082 (US)**
- **VASUDEVAN, Subramanian**
**Morristown, NJ 07967 (US)**

(74) Representative: **Menzietti, Domenico et al**
**Alcatel Lucent**
**Intellectual Property & Standards**
**70430 Stuttgart (DE)**

(56) References cited:
- **ALCATEL-LUCENT SHANGHAI BELL ET AL: "Discussion on mobility estimation for HetNet", 3GPP DRAFT; R2-113181-DISCUSSION ON MOBILITY ESTIMATION FOR HTN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Barcelona, Spain; 20110509, 3 May 2011 (2011-05-03), XP050495353, [retrieved on 2011-05-03]**
- **ITRI: "Discussion on mobility state detection for HetNet", 3GPP DRAFT; R2-114219 DISCUSSION ON MOBILITY STATE DETECTION FOR HETNET, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 16 August 2011 (2011-08-16), XP050540008, [retrieved on 2011-08-16]**
- **NOKIA SIEMENS NETWORKS ET AL: "Enhancements for UE Mobility State Estimation", 3GPP DRAFT; R2-114316_HTN_UE_MOBILITY_STATE_ESTIM ATION V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 16 August 2011 (2011-08-16), XP050540046, [retrieved on 2011-08-16]**

- **NEW POSTCOM: "UE Mobility state estimation in HetNet", 3GPP DRAFT; R2-115314_MOBILITY STATE ESTIMATION IN HETNET, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 2 October 2011 (2011-10-02), XP050540719, [retrieved on 2011-10-02]**
- **ALCATEL-LUCENT ET AL: "On UE-speed-aware methods for improving the mobility performance in HetNets", 3GPP DRAFT; R2-115211-METHODS FOR IMPROVING MOBILITY PERFORMANCE IN HETNET, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 4 October 2011 (2011-10-04), XP050540994, [retrieved on 2011-10-04]**

## Description

## BACKGROUND OF THE INVENTION

Heterogeneous networks (HetNets or HTNs) are now being developed wherein cells of smaller size are embedded within the coverage area of larger macro cells and the small cells could even share the same carrier frequency with the umbrella macro cell, primarily to provide increased capacity in targeted areas of data traffic concentration. Such heterogeneous networks try to exploit the spatial variations in user (and traffic) distribution to efficiently increase the overall capacity of the wireless network. Those smaller-sized cells are typically referred to as pico cells or femto cells, and for purposes of the description herein will be collectively referred to as small cells.

There are several scenarios which require performance improvement with speed aware mobility operations in HTNs. Speed information used at the network may be used to improve the network mobility decisions. For example, using speed information, the network may force very high speed user equipment (UE) stay with the macro cell. This reduces the handover (HO) failure rate and avoids unnecessary HOs with short time-of-stay. As another example, the network may adjust the UE configuration parameters based on the UE speed.

At the UE, the UE speed/mobility state permits performing speed dependent UE local adjustment. For example, the UE may perform speed aware Time-To-Trigger (TTT), measurement hysteresis or threshold changes. As another example, the UE may configure speed aware adaptive filters (L1, L3 filter speed dependent parameter configurations). As still other examples, the UE may perform speed aware power saving schemes such as speed aware search, a high speed UE need not search/measure the neighboring small cells, a high speed UE may reduce the Discontinuous Reception (DRX) cycle, etc.

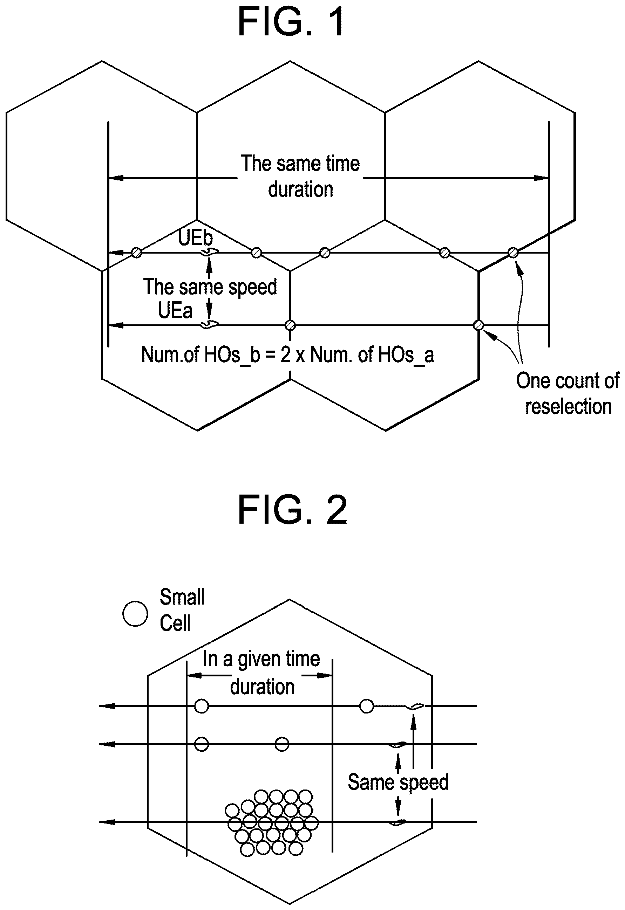

The existing mobility state estimation methods, which are performed at the UE, provide a very rough UE speed estimate. For example, the only standards supported low cost method performed at a UE for speed estimation is simply counting the exact number of handovers during a given period of time. This speed estimation is used to roughly classify the UE speed into high, medium, low mobility states (speed categories). It is very coarse with large estimation variance. Fig. 1 shows how the estimation error could occur in a conventional macro cell only system. In the example, two UEs have the same speed. But due to the difference of their routes, the HO counts of UEb moving along the border area are twice that of the counts of the other UEa moving in the inner area of the cells. As a result, the UEb speed estimation based on HO counts could be twice that of UEa. If the UEb has a medium speed (e.g. 60 km/h), UEb could be wrongly classified into the high speed state (e.g., 120 km/h). This estimation variance can not meet the mobility requirements and applications for small cells. In addition, the radio link shadowing and fading will lead to more frequent handovers when a UE travels along the border area of the cells. In the HetNet environment, more accurate speed estimation is required for supporting, for example, the macro to small cell, and small cell to small cell handovers.

Also, because of the different cell sizes in a HTN, another existing mechanism, which assumes the cells have the same size, is not suitable and can not be directly applied to HTNs. To address the cell size issue in a HTN, there was a suggestion in the 3GPP standards body to provide a UE with the cell size information. However, Fig. 2 shows that even with the cell size information provided to UEs, the existing mobility states approach for speed estimation still has problems: the difference of the small cell placement in different areas could lead to very different HO counts, even if the size of the small cells are provided to the UE. The size of the small cells may be only useful when clusters of small cells are deployed together assuming the UEs travel through the pico center. UEs will suffer the same problem as in the macro cells and be impacted more by the shadowing and fading since their size is much smaller. Therefore the accuracy of the speed estimation will be even worse than in the macro only scenario. For the more commonly seen scenarios that small cells are scattered around, (i.e. the small cells are not located consecutively), the decision may be made based on one single sample of the time the UE stays with the small cell. Given the factor that the UE could move across the small cell tangentially and the impact of fading and shadowing, the single sample without any averaging process will not be useable. Then in addition to the cell size information the distance between the small cells will be a more important factor impacting the results. Additional information is required for the UE to have reasonable mobility state estimation.

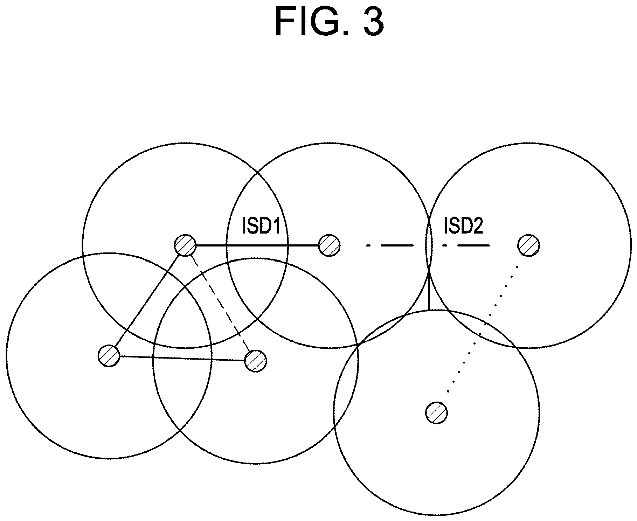

Further, because of the geometry difference in a real network, even for the base stations with the same power, as shown in Fig. 3, the base stations may have different Inter-Site Distances (ISDs) at different coverage areas. In a given period of time, a UE with constant speed will have more HO counts when the UE moves through an area where the cells have smaller ISDs, and have less HO counts when the UE moves through an overage area with longer ISDs.

Alcatel-Lucent Shango Bell publication, "Discussion on Mobility Estimation for HetNet", 3GPP Draft; R2-113181-Discussion on Mobility Estimation for HTN, 3rd Generation Partnership Project (3GPP), Mobile Competence Centre; 650, Route Des Lucioles; F-06921 Sophia-Antipolis Cedex; France, vol RAN WG2, Barcelona, Spain; 2011509, 3 May 2011 (2011-05-03), XP050495353 suggests the evaluation of all possible mobility estimation methods including UE velocity estimation for mobility support in HetNets.

ITR1 "Discussion on mobility state detection for HetNet", 3GPP Draft; R2-114219 Discussion on Mobility state Detection for HETNET, 3RD generation partnership project (3GPP), Mobile Competence Centre; 650, Route Des Lucioles; F-06921 Sophia-Antipolis Cedex; France, vol. RAN WG2 Athens, Greece; 20110822, 16 August 2011 proposes to RAN 2 to consider the effect of different cell sizes for mobility state detection, and to introduce weighting factors reflecting the cell size to be distributed by eNodeBs and to discard CSG HeNB during mobility state detection.

Nokia Siemens Network et al.; "Enhancements for UE Mobility State Estimation" 3GPP Draft; R2-114316_HTN_UE_Mobility-_State_Estimation V1, 3rd Generation Partnership Project (#GPP), Mobile Competence Centre; 650, Route Des Lucioles; F-06921 Sophia-Antipolis Cedex; France, vol. RAN WG2, Athens, Greece; 20110822, 16 August 2011 (2011-08-16), XP050540046 states to investigate enhanced UE mobility state estimation where HetNet deployment aspects like different and varying cell sizes should be taken into account, and that the systems performance benefits of UE MSE should be studied with both single and multiple carriers.

New POSTCOM: "UE Mobility state estimation in HetNet." 3GPP Draft; R2-115314_Mobility State Estimation in HetNet, 3RD generation partnership project (3GPP), Mobile Competence Centre; 650, Route Des Lucioles; F-06921 Sophia-Antipolis Cedex; France, vol. RAN WG2, Zhuhai; 20111010, 2 October 2011 (2011-10-02), XP050540719 teaches weighting factors to be broadcasted by eNBs to reflect the cell size and discusses whether mobility state detection could also consider the number of RRC connection re-establishments.

## SUMMARY OF THE INVENTION

The present invention is defined by the accompanying independent claims. Preferred implementation details, also referred to embodiments in other jurisdictions, are defined by the dependent claims.

At least one embodiment provides a low cost, low power consumption and more accurate UE mobility state estimation method. The mobility state estimation may be preformed at the UE or the network. The mobility state estimation performed at the UE may be used for both active UEs and idle UEs.

Regardless of whether performed at the UE or the network, cell location information may be used in several embodiments for the mobility state estimation to provide accuracy great enough for use in HTNs. The use of the cell location information may also significantly improve the accuracy and reliability of the mobility state estimation in a macro cell only system.

In at least one embodiment, with the small cell location information, the mobility state/speed estimation can be realized when the small cells are scattered at different locations with different distances between each other. In one embodiment, more accurate mobility state/ speed estimation is achieved by taking advantage of the small size of the small cells.

In at least one embodiment, with the macro cell location information, the handover counting at different routes (e.g. center area vs border area) can be adjusted and compensated. This reduces the estimation difference caused by different travel routes taken by UEs.

For example, in one embodiment the method of estimating mobility of a user equipment, includes obtaining location information of at least one base station that participated in a handover of the user equipment, and estimating a mobility of the user equipment based on the obtained location information.

For example, in one embodiment, the at least one base station is a small cell base station. In this embodiment, the obtaining may obtain location information for each small cell base station that participated in a handover of the user equipment during a time interval. The estimating may include determining, for each handover during the time interval, a distance between the small cell base stations participating in the handover based on the obtained location information, and determining the estimated mobility of the user equipment based on the determined distances.

For example, the determining the estimated mobility determines the estimated mobility based on an aggregate of the determined distances and the time interval, and the time interval is from a reliable hand-in to a first small cell base station to a reliable hand-in to a last small cell base station in an observation window.

In another example, the base station is macro base station. In this embodiment, the estimating includes determining, for a pair of consecutive handovers, whether to increment a handover count by one of a first increment and a second increment based on the obtained location information, the first increment being greater than the second increment, and determining the estimated mobility based on the handover count. For example, the determining whether to increment may include determining, for the pair of consecutive handovers, a path angle based on the obtain location information. The path angle is an angle between an estimated first line and an estimated second line. The estimated first line is from a first macro base station location to a second macro base station location. The estimated second line is from the first macro base station location to a third macro base station location. The first and second base stations participat in a first of the pair of handovers, and the second and third base stations participat in a second of the pair of handovers. The determining whether to increment further may include incrementing the handover count by one of the first increment and the second increment based on the determined path angle.

In the above embodiment, the method may further include ignoring ping pong handovers.

In one embodiment, the method may further include classifying a mobility state of the user equipment based on the estimated mobility.

A further embodiment of a method of estimating mobility of a user equipment includes determining whether the user equipment is communicating with one of a macro cell base station and a small cell base station, performing a first mobility estimation process if the user equipment is communicating with a macro cell base station, and performing a second mobility estimation process if the user equipment is communicating with a small cell base station. The first mobility estimation process is based on locations of macro cell base stations participating in macro cell handovers of the user equipment. The second mobility estimation process is based on location information of small cell base stations participating in small cell handovers of the user equipment.

At least one example embodiment relates to a wireless device.

In one embodiment, the wireless device includes a receiver unit configured to receive data, a transmitting unit configured to transmit data, a memory unit configured to store information, and a processing unit coupled to the transmitting unit, the receiving unit, and the memory unit, the processing unit configured to estimate mobility of a user equipment based on location information of at least one base station that participated in a handover of the user equipment.

For example, the wireless device may be the user equipment or a network element.

## BRIEF DESCRIPTION OF THE DRAWINGS

The example embodiments will become more fully understood from the detailed description given herein below and the accompanying drawings, wherein like elements are represented by like reference numerals, which are given by way of illustration only and thus are not limiting of the present invention and wherein:

Fig. 1 illustrates that conventional mobility state estimation method results depend on a route of the user equipment (UE).
Fig. 2 illustrates that convention handover counting is inaccurate for mobility state estimation when small cells are scattered throughout a macro cell.
Fig. 3 illustrates that even if base station transmission power is the same for base stations in a given area, the inter-site distances between the base stations may differ.
Fig. 4 is a diagram illustrating an example structure of a wireless device.
Fig. 5 illustrates a flow chart of a method of speed or mobility estimation according to a first embodiment.
Fig. 6 illustrates a UE traveling through a plurality of small cells m,..., n.
Fig. 7 illustrates a flow chart of a method of speed or mobility estimation according to a second embodiment.

Fig. 8 illustrates two example path angles.
Fig. 9 illustrates a flow chart of a method of speed or mobility estimation according to a third embodiment.

## DETAILED DESCRIPTION OF THE EMBODIMENTS

Various example embodiments will now be described more fully with reference to the accompanying drawings in which some example embodiments are shown.

While example embodiments are capable of various modifications and alternative forms, the embodiments are shown by way of example in the drawings and will be described herein in detail. It should be understood, however, that there is no intent to limit example embodiments to the particular forms disclosed. On the contrary, example embodiments are to cover all modifications, equivalents, and alternatives falling within the scope of this disclosure. Like numbers refer to like elements throughout the description of the figures.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/ acts involved.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Portions of example embodiments and corresponding detailed description are presented in terms of algorithms performed by a controller. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

In the following description, illustrative embodiments will be described with reference to acts and symbolic representations of operations (e.g., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at existing network elements, existing end-user devices and/or post-processing tools (e.g., mobile devices, laptop computers, desktop computers, etc.). Such existing hardware may include one or more Central Processing Units (CPUs), digital signal processors (DSPs), application-specific-integrated-circuits, field programmable gate arrays (FPGAs) computers or the like.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Although a flow chart may describe the operations as a sequential process, many of the operations may be performed in parallel, concurrently or simultaneously. In addition, the order of the operations may be rearranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

Note also that the software implemented aspects of example embodiments are typically encoded on some form of tangible (or recording) storage medium or implemented over some type of transmission medium. As disclosed herein, the term "storage medium" may represent one or more devices for storing data, including read only memory (ROM), random access memory (RAM), magnetic RAM, magnetic disk storage mediums, optical storage mediums, flash memory devices and/or other tangible machine readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks.

A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable means including memory sharing, message passing, token passing, network transmission, etc.

As used herein, the term "user equipment or UE" may be synonymous to a mobile user, mobile station, mobile terminal, user, subscriber, wireless terminal, terminal and/or remote station and may describe a remote user of wireless resources in a wireless communication network. Accordingly, a UE may be a wireless phone, wireless equipped laptop, wireless equipped appliance, etc.

The term "base station" may be understood as a one or more cell sites, base stations, nodeBs, enhanced NodeBs, access points, and/or any terminus of radio frequency communication. Although current network architectures may consider a distinction between mobile/user devices and access points/cell sites, the example embodiments described hereafter may also generally be applicable to architectures where that distinction is not so clear, such as ad hoc and/or mesh network architectures, for example.

Communication from the base station to the UE is typically called downlink or forward link communication. Communication from the UE to the base station is typically called uplink or reverse link communication.

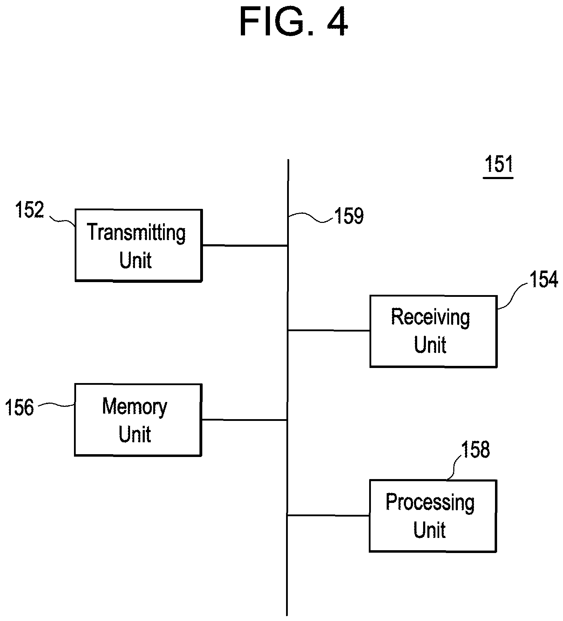

FIG. 4 is a diagram illustrating an example structure of a wireless device. The wireless device 151 may be a user equipment (UE) or a base station. The wireless device 151 may include, for example, a data bus 159, a transmitting unit 152, a receiving unit 154, a memory unit 156, and a processing unit 158.

The transmitting unit 152, receiving unit 154, memory unit 156, and processing unit 158 may send data to and/or receive data from one another using the data bus 159. The transmitting unit 152 is a device that includes hardware and any necessary software for transmitting wireless signals including, for example, data signals, control signals, and signal strength/quality information via one or more wireless connections to other wireless devices (e.g., to a base station or UE).

The receiving unit 154 is a device that includes hardware and any necessary software for receiving wireless signals including, for example, data signals, control signals, and signal strength/quality information via one or more wireless connections to other wireless devices.

The memory unit 156 may be any storage medium capable of storing data including magnetic storage, flash storage, etc.

The processing unit 158 may be any device capable of processing data including, for example, a microprocessor configured to carry out specific operations based on input data, or capable of executing instructions included in computer readable code.

For example, the processing unit 158 is capable of implementing the methods of UE speed estimation described in detail below.

Next, a first embodiment for mobility or speed estimation will be described. In this first embodiment, since the size of the small cells (e.g., pico, micro, femto, etc.) is small, when a UE passes through a small cell, the location of the small cell base station may be considered as the location of the UE at that moment. Over a given period of time, the UE passes through different small cells. As such, in this embodiment, the accumulated distance between those small cell base stations is considered as the distance which the UE has travelled.

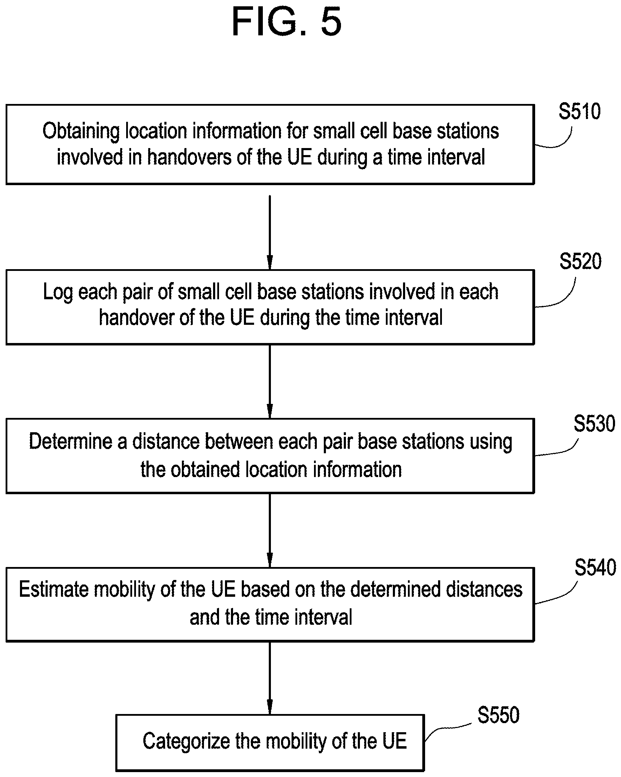

Fig. 5 illustrates a flow chart of the method of speed estimation according to this first embodiment. The first embodiment may be performed at a network element such as a base station or network controller in communication with several base stations. The first embodiment may also be performed at the UE. For purposes of description only, the first embodiment will be described as being performed at the UE, and will be described for a UE having the structure of Fig. 4.

The embodiment of Fig. 5 is applied over a time window having time interval Tn. In step S510, the UE obtains the location of small cell base stations. For example, the UE may obtain coordinates (locations) of the small cell base stations via broadcast or dedicated signaling. Each small cell base station may signal its own location, and may also signal the location of its neighbors. As will be appreciated, while Fig. 5 illustrates steps performed in a serial fashion, these steps may be performed in parallel, may be repeatedly formed, etc. It will also be appreciated that the location information may have been obtained prior to the time interval. The processing unit 158 may store the obtained location information for each base station in association with an identifier of the base station in the memory unit 156.

Next, for each pair of small cell base stations involved in a reliable handover (into the small cell) of the UE during the time interval Tn (described in more detail below), the UE logs or records the small cell base stations. For example, the processing unit 158 may record a pair of the coordinates (latitude and longitude) associated with each of the two base stations associated with the handover of the UE and the accumulated TN in a desired time window in the memory unit 156. However, the UE will ignore or remove records associated with ping-pong handovers. As one example, this may be accomplished by eliminating all but one of the reliable handovers (hand-ins, the handover into the small cell) that occur between a pair of small cell base stations that occur within a threshold time period. As another example, in at least one wireless standard, if a UE stay with a cell for a time less than a minimum time of stay (MTS) this is considered a ping-pong. So based on this criterion, the UE could ignore the ping-pongs. Only after reliably handover into a small cell are the cell coordinates and time logged. For the next UE handover into a next small cell, the UE will do the same logging and could process the data to perform the speed estimation.

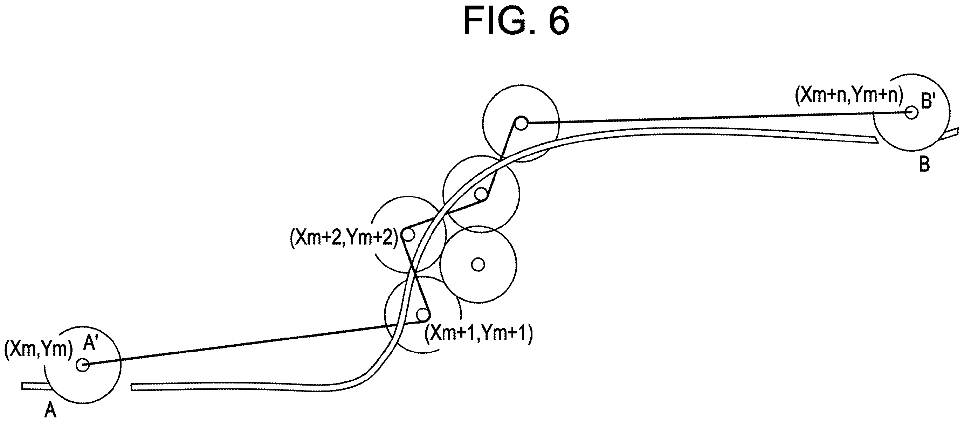

In step S530, the processing unit 158 determines the distance between each pair of small cell base stations logged in step S520 using the obtained location information. This will step will be further explained with reference to Fig. 6. Fig. 6 illustrates a UE traveling through a plurality of small cells m,..., n. The distance between small cell base station_m and small cell base station_m+1 is $D1 = \text{square-root}((Xm+1 - Xm)^2 + (Ym+1-Ym)^2)$, where $(Xm, Ym)$ are the coordinates of small cell base station_m and $(Xm+1, Ym+1)$ are the coordinates of the small cell base station_m+1. Similarly, the distance between small cell base station_m+1 and small cell base station_m+2 is D2, and is determined in the same manner as described above. As such distances D1, D2, ..., Dm-n are obtained.

In step S540, the processing unit 158 then determines the accumulated distance as D1+D2+...+Dm-n, and estimates the mobility (or UE speed) as:

$$UE\ speed = \{D1+D2+...+Dn\text{-}m\}/\ Tn$$

where Tn is the accumulated time logged by the UE from handover into the first small to the handover into the nth small cell.

Furthermore, the estimated speed or mobility may be further classified or categorized by the UE in step S550. For example the UE estimated mobility may be further classified into high, medium and low speed based on a set of configured speed thresholds. The UE may communicate the estimated mobility and/or classification to the network (e.g., base station, network controller, and/or etc.).

As will be appreciated, if this embodiment is performed at a network element, the network element will obtain the same location information and log the same handover pairs of base stations. For example, base stations and network controllers may communicate information with each over via interfaces (e.g., X2 interfaces). Also network elements may communicate with the UE. Also, once the UE mobility is estimated, this information may be communicated to the UE. Still further a per UE based handover history data block may be maintained at the network. This information may be transferred with the UE when the UE moves to a new cell or a new network.

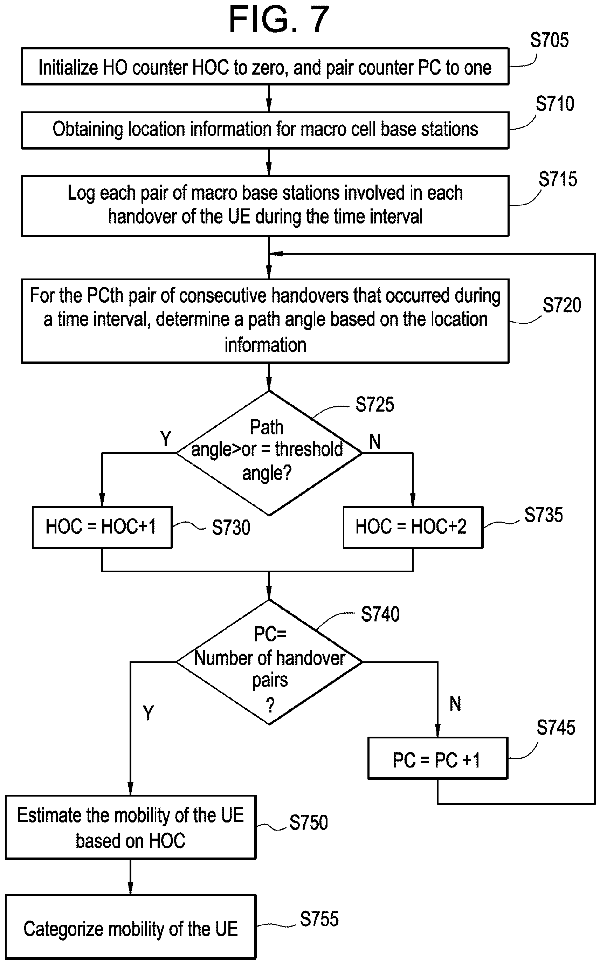

Next, a second embodiment of a method for estimating UE mobility will be described. In this embodiment, macro base station location information is used to improve the reliability and accuracy of the mobility estimation. Fig. 7 illustrates a flow chart of a method of speed or mobility estimation according to the second embodiment. The second embodiment may be performed at a network element such as a base station or network controller in communication with several base stations. The second embodiment may also be performed at the UE. If the mobility state or speed estimation is conducted at a UE, the results could be reported from the UE to the network autonomously or requested by the network. For purposes of description only, the second embodiment will be described as being performed at the UE, and will be described for a UE having the structure of Fig. 4.

The embodiment of Fig. 7 is applied over a time window having time interval Tn. In step S705, a handover counter HOC is initialized to zero and pair counter PC is initialized to 1. In step S710, the UE obtains the location of macro cell base stations. For example, the UE may obtain coordinates (locations) of the macro cell base stations via broadcast or dedicated signaling. Each macro cell base station may signal its own location, and may also signal the location of its neighbors. As will be appreciated, while Fig. 7 illustrates steps performed in a serial fashion, these steps may be performed in parallel, may be repeatedly formed, etc. It will also be appreciated that the location information may have been obtained prior to the time interval. The processing unit 158 may store the obtained location information for each base station in association with an identifier of the base station in the memory unit 156.

Next, for each pair of macro cell base stations involved in a handover of the UE during a time interval Tn, the UE logs or records the macro cell base stations in step S715. For example, the processing unit 158 may record a location represented by a pair of coordinates associated with each of the two base station associated with the handover of the UE in the memory unit 156. However, the UE will ignore or remove records associated with ping-pong handovers. This may be accomplished in the same manner as described above with respect to small cell base stations and Fig. 5.

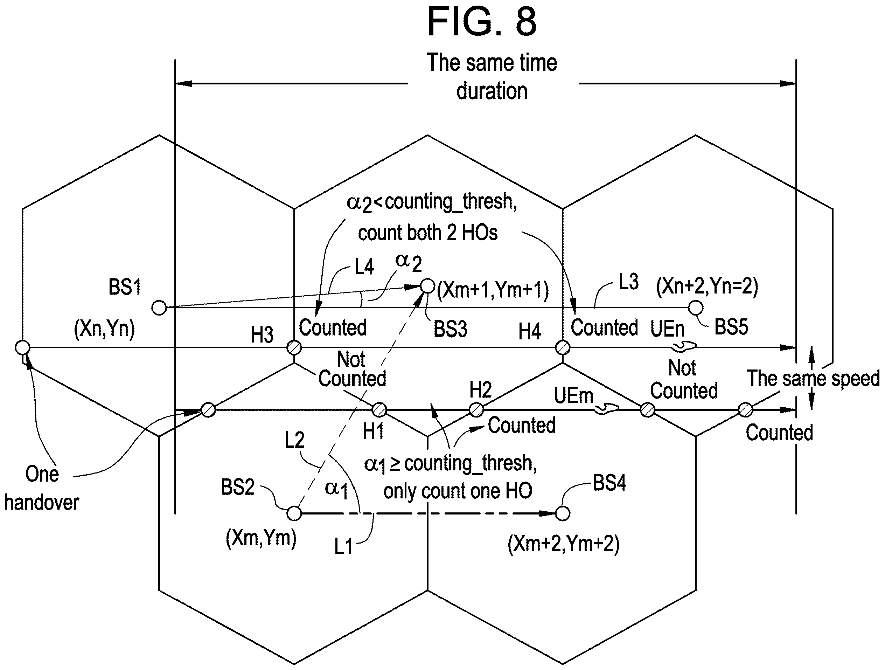

Next, for the PCth pair of consecutive handovers that occurred during the time interval Tn, the processing unit 158 determines a path angle based on the location information of the macro base stations in step S720. Fig. 8 illustrates two example path angles, and the determination of path angles will be described with respect to Fig. 8. As shown, for a first pair of handovers H1 and H2, the example UEm moves from a macro cell served by base station BS2 to a macro cell served by base station BS3, and from the macro cell served by base station BS3 to a macro cell served by base station BS4. Base stations BS2, BS3 and BS4 have respective coordinates (Xm,Ym); (Xm+1, Ym+1); and (Xm+2, Ym+2). Fig. 8 illustrates a first line L1 from the base station BS2 to the base station BS4 and a second line L2 from the base station BS2 and the base station BS3. Using the coordinates of the base stations, the processing unit 158 may determine the angle between a first line L1 and second line L2 as the path angle $\alpha1$.

Similarly, for a second pair of handovers H3 and H4, the example UEn moves from a macro cell served by base station BS1 to a macro cell served by base station BS3, and from the macro cell served by base station BS3 to a macro cell served by base station BS5. Base stations BS1, BS3 and BS5 have respective coordinates (Xn,Yn); (Xm+1, Ym+1); and (Xn+2, Yn+2). Fig. 8 illustrates a third line L3 from the base station BS1 to the base station BS5 and a fourth line L4 from the base station BS1 to the base station BS3. Using the coordinates of the base stations, the processing unit 158 may determine the angle between a third line L3 and the fourth line L4 as the path angle $\alpha2$.

Next, in step S725, the processing unit 158 determines if the path angle is greater than or equal to a desired threshold path angle. For example, in one embodiment, the desired threshold may be preconfigured. If the path angle is greater than or equal to the threshold path angle, the processing unit 158 increments the handover counter HOC by 1 in step S730. If not, then the processing unit 158 increments the handover counter HOC by 2 in step S735. Referring back to Fig. 8, it will be appreciated that when the path angle is above the threshold such as path angle α1, the UE is traveling along the boundaries of the macro cells and thus a higher number of handovers are occurring even though the UE may be moving at the same speed as a UE traveling through the inner portions of the cells. Accordingly, instead of counting both of the handovers, this embodiment increases the handover counter by a reduced amount - one count for two handovers in this example. By contrast, when the path angle is below the threshold such as path angle α2, the UE is traveling more towards the inner portions of cells, and both handovers are counted. It will be appreciated that different increments than 1 and 2 for respective steps S730 and S735 may be used, but that the increment for step S735 will be greater than the increment for step S730.

Next, in step S740, the processing unit 158 determines if the pair counter PC equals the number of handover pairs that occurred during the time interval. If not, then the pair counter PC is incremented by 1 and processing returns to step S720. If so, then in step S750, the UE estimates the mobility or speed of the UE based on the handover count HOC in any well-known manner. For example, if the commonly assumed inter-site distance ISD (i.e., distance between directly adjacent base stations) is 500m, in a given period of time Tn, the speed estimation is 500(HOC -1)/Tn. In a real system, if the locations of the macro cells are known to the UE, the real ISD could be used to scale the HO counting results. i.e. the final speed estimation should be real_ISD(HOC-1)/Tn. If the HO count is directly used against the HO number thresholds to determine the high, medium, low mobility states, the scaled HO counting results = real_ISD* HOC/500 (if the common ISD, which is used to determine the thresholds, is 500).

The UE may then categorize the mobility based on the estimated speed in step S755. For example the UE estimated mobility may be further classified into high, medium and low speed based on a set of configured speed thresholds.

As will be appreciated, if this embodiment is performed at a network element, the network element will obtain the same location information and log the same handover pairs of base stations. For example, base stations and network controllers may communicate information with each over via interfaces (e.g., X2 interfaces). Also network elements may communicate with the UE. Also, once the UE mobility is estimated, this information may be communicated to the UE.

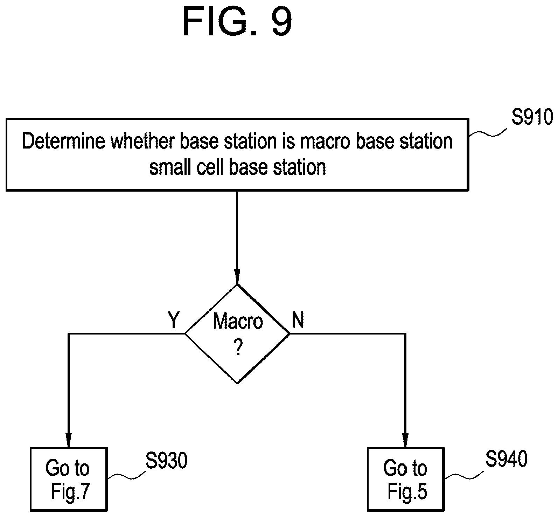

Next, a third embodiment of a method for estimating UE mobility will be described. Fig. 9 illustrates a flow chart of a method of speed or mobility estimation according to the third embodiment. The third embodiment may be performed at a network element such as a base station or network controller in communication with several base stations. The third embodiment may also be performed at the UE. For purposes of description only, the third embodiment will be described as being performed at the UE, and will be described for a UE having the structure of Fig. 4.

As shown, in step S910, the UE determines whether the UE is communicating with and being handed over between macro base stations or small cell base stations. The UE may make this determination by receiving this information via broadcast or dedicated signaling from the base stations. For example, the information may directly indicate the nature of the base station, or may indirectly indicate (e.g., indicate size of coverage area, power of base station, etc.) the nature of the base station.

If the UE determines the base station is a macro base station, then in step S930, the UE estimates mobility according the embodiment of Fig. 7 described above. If the UE determines that the base station is not a macro base station, or alternatively determines the base station is a small cell base station, then in step S940, the UE estimates mobility according to the embodiment of Fig. 5.

The example embodiments provide a low cost and efficient mobility and mobility state (normal, medium, high speed) estimation method which can be employed at the UE or the network. The UE based approach could be used for both connected and idle UEs.

The example embodiments being thus described, it will be obvious that the same may be varied in many ways. Such variations are not to be regarded as a departure from the invention, and all such modifications are intended to be included within the scope of the invention.

**Claims**

1. A method of estimating mobility of a user equipment, the method performed by the user equipment and comprising:

   obtaining (S510, S520, S710, S715) location information of at least one base station that participated in a handover of the user equipment; determining (S910) whether the user equipment is communicating with one of a macro cell base station and a small cell base station; performing (S930) a first mobility estimation process if the user equipment is communicating with the macro cell base station, the first mobility estimation process (S720, S759) based on the location information of macro cell base stations participating in macro cell handovers of the user equipment; and performing (S940) a second mobility estimation process (S530, S540) if the user equipment is communicating with the small cell base station, the second mobility estimation process based on the location information of small cell base stations participating in small cell handovers of the user equipment.

2. The method of claim 1, wherein
   when the at least one base station is the small cell base station,
   the obtaining obtains location information for each small cell base station that participated in a handover of the user equipment during a time interval; and
   the second mobility estimation process includes,

   determining (S530), for each handover during the time interval, a distance between the small cell base stations participating in the handover based on the obtained location information, and determining (S540) the estimated mobility of the user equipment based on the determined distances.

3. The method of claim 2, wherein the determining the estimated mobility determines the estimated mobility based on an aggregate of the determined distances and the time interval, the time interval being from a reliable hand-in to a first small cell base station to a reliable hand-in to a last small cell base station in an observation window.

4. The method of claim 1, wherein
   when the base station is the macro base station,
   determining (S720-S745), for a pair of consecutive handovers, whether to increment a handover count by one of a first increment and a second increment based on the obtained location information, the first increment being greater than the second increment; and
   determining (S750) the estimated mobility based on the handover count.

5. The method of claim 4, wherein the determining whether to increment includes,

   determining (S720), for the pair of consecutive handovers, a path angle based on the obtain location information, the path angle being an angle between an estimated first line and an estimated second line, the estimated first line being from a first macro base station location to a second macro base station location, the estimated second line being from the first macro base station location to a third macro base station location, the first and second base stations participating in a first of the pair of handovers, and the second and third base stations participating in a second of the pair of handovers, and incrementing (S725-S735) the handover count by one of the first increment and the second increment based on the determined path angle.

6. The method of claim 5, wherein the incrementing increments the handover count based on the first increment if the detemined path angle is less than a threshold angle, and the incrementing increments the handover count based on the second count if the determined path angle is greater than the threshold angle.

7. The method of claim 1, further comprising:

   classifying a mobility state of the user equipment based on the estimated mobility.

8. A user equipment, comprising:

   a receiver unit (154) configured to receive data;
   a transmitting unit (152) configured to transmit data;
   a memory unit (156) configured to store information; and
   a processing unit (158) coupled to the transmitting unit, the receiving unit, and the memory unit, the processing unit configured to obtaining (S510, 5520, S710, S715) location information of at least one base station that participated in a handover of the user equipment;
   determining (S910) whether the user equipment is communicating with one of a macro cell base station and a small cell base station;
   performing (S930) a first mobility estimation process if the user equipment is communicating with the macro cell base station, the first mobility estimation process based on the location information of macro cell base stations participating in macro cell handovers of the user equipment; and
   performing (S940) a second mobility estimation process if the user equipment is communicating with the small cell base station, the second mobility estimation process based on the location information of small cell base stations participating in small cell handovers of the user equipment.

**Patentansprüche**

1. Verfahren zum Abschätzen der Mobilität eines Teilnehmergeräts, wobei das Verfahren von dem Teilnehmergerät durchgeführt wird und umfasst:

   Erhalten (S510, S520, S710, S715) von Standortinformation von mindestens einer Basisstation, die an einem Handover des Teilnehmergeräts teilgenommen hat;

Bestimmen (S910), ob das Teilnehmergerät mit einer Station auf Basis von Makrozellen oder mit einer Station auf Basis kleiner Zellen kommuniziert;

Durchführen (S930) eines ersten Mobilitätsabschätzungsprozesses, wenn das Teilnehmergerät mit der Station auf Basis von Makrozellen kommuniziert, wobei der erste Mobilitätsabschätzungsprozess (S720, S759) auf der Standortinformation der Stationen auf Basis von Makrozellen basiert, die an den Makrozellen-Handovers des Teilnehmergeräts teilnehmen; und

Durchführen (S940) eines zweiten Mobilitätsabschätzungsprozesses (S530, S540), wenn das Teilnehmergerät mit der Station auf Basis von kleinen Zellen kommuniziert, wobei der zweite Mobilitätsabschätzungsprozess basiert auf der Standortinformation der Stationen auf Basis von kleinen Zellen, die an den Kleinzellen-Handovers des Teilnehmergeräts teilnehmen.

2. Verfahren nach Anspruch 1, wobei, wenn die mindestens eine Basisstation die Station auf Basis kleiner Zellen ist, Aufenthaltsinformation für jede Station auf Basis kleiner Zellen erhalten wird, die an einem Handover des Teilnehmergeräts während eines Zeitintervalls teilgenommen hat; und der zweite Mobilitätsabschätzungsprozess einschließt,

Bestimmen (S530), für jedes Handover während des Zeitintervalls, eines Abstands zwischen den Stationen auf Basis kleiner Zellen, die an dem Handover teilnehmen, auf Grundlage der erhaltenen Standortinformation, und

Bestimmen (S540) der geschätzten Mobilität des Teilnehmergeräts auf Grundlage der bestimmten Abstände.

3. Verfahren nach Anspruch 2, wobei das Bestimmen der geschätzten Mobilität die geschätzte Mobilität bestimmt auf Grundlage der Summe der bestimmten Abstände und des Zeitintervalls, wobei das Zeitintervall von einem zuverlässigen Hand-in bis zu einer ersten Station auf Basis kleiner Zellen zu einem zuverlässigen Hand-in zu einer letzten Station auf Basis kleiner Zellen in einem Beobachtungsfenster reicht.

4. Verfahren nach Anspruch 1, wobei, wenn die Basisstation die Makro-Basisstation ist,

Bestimmen (S720-S745), für ein Paar aufeinanderfolgender Handovers, ob eine Handover-Zählung um eins erhöht wird in einem ersten Inkrement und in einem zweiten Inkrement auf Grundlage der erhaltenen Aufenthaltsinformation, wobei das erste Inkrement größer ist als das zweite Inkrement; und

Bestimmen (S750) der geschätzten Mobilität auf Grundlage der Handover-Zählung.

5. Verfahren nach Anspruch 4, wobei das Bestimmen, ob Inkrementiert werden soll, einschließt,

Bestimmen (S720), für das Paar aufeinanderfolgender Handovers, eines Pfadwinkels auf Grundlage der erhaltenen Aufenthaltsinformation, wobei der Pfadwinkel ein Winkel ist zwischen einer geschätzten ersten Linie und einer geschätzten zweiten Linie, wobei die geschätzte erste Linie von einem ersten Makro-Basisstationsstandort zu einem zweiten Makro-Basisstationsstandort reicht, wobei die geschätzte zweite Linie von dem ersten Makro-Basisstationsstandort zu einem dritten Makro-Basisstationsstandort reicht, wobei die erste und die zweite Basisstation an einem ersten Paar von Handovers teilnimmt, und wobei die zweite und die dritte Basisstation an einem zweiten Paar von Handovers teilnimmt, und

Inkrementieren (S725-S735) der Handover-Zählung um eins des ersten Inkrements und des zweiten Inkrements auf Grundlage des bestimmten Pfadwinkels.

6. Verfahren nach Anspruch 5, wobei das Inkrementieren die Handover-Zählung erhöht auf Grundlage des ersten Inkrements, wenn der bestimmte Pfadwinkel geringer ist als ein Schwellenwertwinkel, und wobei das Inkrementieren die Handover-Zählung erhöht auf Grundlage der zweiten Zählung, wenn der bestimmte Pfadwinkel größer ist als der Schwellenwertwinkel.

7. Verfahren nach Anspruch 1, weiterhin umfassend:

Klassifizieren eines Mobilitätszustands des Teilnehmergeräts auf Grundlage der geschätzten Mobilität.

8. Teilnehmergerät, umfassend:

eine Empfängereinheit (154), die konfiguriert ist zum Empfangen von Daten;
eine Sendeeinheit (152), die konfiguriert ist zum Senden von Daten;
eine Speichereinheit (156), die konfiguriert ist zum Speichern von Information; und eine Bearbeitungseinheit (158), die mit der Sendeeinheit, der Empfängereinheit und der Speichereinheit gekoppelt ist, wobei die Bearbeitungseinheit konfiguriert ist zum Erhalten (S510, S520, S710, S715) der Standortinformation von mindestens einer Basisstation, die an einem Handover des Teilnehmergeräts teilgenommen hat;
Bestimmen (S910), ob das Teilnehmergerät mit einer Station auf Basis von Makrozellen oder mit einer Station auf Basis kleiner Zellen kommuniziert;
Durchführen (S930) eines ersten Mobilitätsabschätzungsprozesses, wenn das Teilnehmergerät mit der Station auf Basis von Makrozellen kommuniziert,

wobei der erste Mobilitätsabschätzungsprozess basiert auf der Standortinformation der Stationen auf Basis von Makrozellen, die an den Makrozellen-Handovers des Teilnehmergeräts teilnehmen; und

Durchführen (S940) eines zweiten Mobilitätabschätzungsprozesses, wenn das Teilnehmergerät mit der Station auf Basis von kleinen Zellen kommuniziert, wobei der zweite Mobilitätsabschätzungsprozess basiert auf der Standortinformation der Stationen auf Basis von kleinen Zellen, die an den Handovers der kleinen Zellen des Teilnehmergeräts teilnehmen.

## Revendications

1.  Procédé d'estimation de mobilité d'un équipement utilisateur, le procédé étant exécuté par l'équipement utilisateur et comprenant les étapes suivantes :

    obtenir (S510, S520, S710, S715) des informations de localisation d'au moins une station de base qui a participé à un transfert de l'équipement utilisateur ;
    déterminer (S910) si l'équipement utilisateur communique avec une station de base de macrocellule ou une station de base de petite cellule ;
    exécuter (S930) un premier processus d'estimation de mobilité si l'équipement utilisateur communique avec la station de base de macrocellule, le premier processus d'estimation de mobilité (S720, S759) étant basé sur les informations de localisation des stations de base de macrocellule participant aux transferts de macrocellule de l'équipement utilisateur ; et
    exécuter (S940) un deuxième processus d'estimation de mobilité (S530, S540) si l'équipement utilisateur communique avec la station de base de petite cellule, le deuxième processus d'estimation de mobilité étant basé sur les informations de localisation des stations de base de petite cellule participant aux transferts de petite cellule de l'équipement utilisateur.

2.  Procédé selon la revendication 1, dans lequel lorsque l'au moins une station de base est la station de base de petite cellule, l'obtention obtient des informations de localisation pour chaque station de base de petite cellule qui a participé à un transfert de l'équipement utilisateur durant un intervalle de temps ; et le deuxième processus d'estimation de mobilité comprend les étapes suivantes, déterminer (S530), pour chaque transfert durant l'intervalle de temps, une distance entre les stations de base de petite cellule participant au transfert sur la base des informations de localisation obtenues, et déterminer (S540) la mobilité estimée de l'équipement utilisateur sur la base des distances déterminées.

3.  Procédé selon la revendication 2, dans lequel la détermination de la mobilité estimée détermine la mobilité estimée sur la base d'un agrégat des distances déterminées et de l'intervalle de temps, l'intervalle de temps étant entre un transfert fiable vers une première station de base de petite cellule et un transfert fiable vers une dernière station de base de petite cellule dans une fenêtre d'observation.

4.  Procédé selon la revendication 1, dans lequel lorsque la station de base est la station de base macro, déterminer (S720-S745), pour une paire de transferts consécutifs, s'il faut incrémenter un comptage de transferts d'un premier incrément ou d'un deuxième incrément sur la base des informations de localisation obtenues, le premier incrément étant supérieur au deuxième incrément ; et déterminer (S750) la mobilité estimée sur la base du comptage de transferts.

5.  Procédé selon la revendication 4, dans lequel déterminer s'il faut incrémenter consiste, à déterminer (S720), pour la paire de transferts consécutifs, un angle de trajectoire sur la base des informations de localisation obtenues, l'angle de trajectoire étant un angle entre une première ligne estimée et une deuxième ligne estimée, la première ligne estimée entre une première localisation de station de base macro et une deuxième localisation de station de base macro, la deuxième ligne estimée étant entre la première localisation de station de base macro et une troisième localisation de station de base macro, la première et la deuxième stations de base participant à un premier transfert de la paire de transferts, et la deuxième et la troisième stations de base participant à un deuxième transfert de la paire de transferts, et à incrémenter (S725-S735) le comptage de transferts du premier incrément ou du deuxième incrément sur la base de l'angle de trajectoire déterminé.

6.  Procédé selon la revendication 5, dans lequel l'incrémentation incrémente le comptage de transferts sur la base du premier incrément si l'angle de trajectoire déterminé est inférieur à un angle de seuil, et l'incrémentation incrémente le comptage de transferts sur la base du deuxième décompte si l'angle de trajectoire déterminé est supérieur à l'angle de seuil.

7.  Procédé selon la revendication 1, comprenant en outre l'étape suivante :

classer un état de mobilité de l'équipement utilisateur sur la base de la mobilité estimée.

8. Équipement utilisateur, comprenant :

une unité de réception (154) configurée pour recevoir des données ;
une unité de transmission (152) configurée pour transmettre des données ;
une unité de mémoire (156) configurée pour stocker des informations ; et
une unité de traitement (158) couplée à l'unité de transmission, à l'unité de réception et à l'unité de mémoire, l'unité de traitement étant configurée pour obtenir (S510, S520, S710, S715) des informations de localisation d'au moins une station de base qui a participé à un transfert de l'équipement utilisateur ;
déterminer (S910) si l'équipement utilisateur communique avec une station de base de macrocellule ou une station de base de petite cellule ;
exécuter (S930) un premier processus d'estimation de mobilité si l'équipement utilisateur communique avec la station de base de macrocellule, le premier processus d'estimation de mobilité étant basé sur les informations de localisation des stations de base de macrocellule participant aux transferts de macrocellule de l'équipement utilisateur ; et
exécuter (S940) un deuxième processus d'estimation de mobilité si l'équipement utilisateur communique avec la station de base de petite cellule, le deuxième processus d'estimation de mobilité étant basé sur les informations de localisation des stations de base de petite cellule participant aux transferts de petite cellule de l'équipement utilisateur.

# FIG. 1

The same time
duration

UEb

The same speed
UEa

Num.of HOs_b = 2 x Num. of HOs_a

One count of
reselection

# FIG. 2

Small
Cell

In a given time
duration

Same speed

# FIG. 3

# FIG. 4

# FIG. 5

Obtaining location information for small cell base stations involved in handovers of the UE during a time interval — S510

Log each pair of small cell base stations involved in each handover of the UE during the time interval — S520

Determine a distance between each pair base stations using the obtained location information — S530

Estimate mobility of the UE based on the determined distances and the time interval — S540

Categorize the mobility of the UE — S550

FIG. 6

# FIG. 7

Initialize HO counter HOC to zero, and pair counter PC to one — S705

Obtaining location information for macro cell base stations — S710

Log each pair of macro base stations involved in each handover of the UE during the time interval — S715

For the PCth pair of consecutive handovers that occurred during a time interval, determine a path angle based on the location information — S720

Path angle>or = threshold angle? — S725

Y

HOC = HOC+1 — S730

N

HOC = HOC+2 — S735

PC= Number of handover pairs ? — S740

Y

N

PC = PC +1 — S745

Estimate the mobility of the UE based on HOC — S750

Categorize mobility of the UE — S755

FIG. 8

The same time
duration

$\alpha2 <$counting_thresh,
count both 2 HOs

L4   $\alpha2$

BS1                                    (Xm+1,Ym+1)          L3   (Xn+2,Yn=2)

(Xn,Yn)          H3   Counted       BS3       H4   Counted   UEn   BS5

Not
Counted                                                Not
Counted       The same speed

H2       UEm              Counted

L2   H1   Counted

One
handover          BS2        $\alpha1$   $\alpha1 \geq$ counting_thresh,
only count one HO          BS4

(Xm,Ym)   L1                        (Xm+2,Ym+2)

EP 2 764 740 B1

# FIG. 9

Determine whether base station is macro base station small cell base station ⟿ S910

Macro ?

Y

N

Go to Fig.7 ⟿ S930

Go to Fig.5 ⟿ S940

# EP 2 764 740 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Discussion on Mobility Estimation for HetNet. **ALCA-TEL-LUCENT SHANGO BELL PUBLICATION.** 3GPP Draft; R2-113181-Discussion on Mobility Estimation for HTN, 3rd Generation Partnership Project (3GPP). Mobile Competence Centre, 03 May 2011, vol. RAN WG2
- Discussion on mobility state detection for HetNet. **ITR1.** 3GPP Draft; R2-114219 Discussion on Mobility state Detection for HETNET, 3RD generation partnership project (3GPP). Mobile Competence Centre, 16 August 2011, vol. RAN WG2
- Enhancements for UE Mobility State Estimation. **NO-KIA SIEMENS NETWORK et al.** 3GPP Draft; R2-114316_HTN_UE_Mobility-_State_Estimation V1, 3rd Generation Partnership Project (#GPP). Mobile Competence Centre, 16 August 2011, vol. RAN WG2
- UE Mobility state estimation in HetNet. **NEW POST-COM.** 3GPP Draft; R2-115314_Mobility State Estimation in HetNet, 3RD generation partnership project (3GPP). Mobile Competence Centre, 02 October 2011, vol. RAN WG2